# EUROPEAN PATENT APPLICATION

(11) **EP 3 991 831 A1**
(43) Date of publication of application: **04.05.2022**
(21) Application number: 20204899.7
(22) Date of filing: 30.10.2020
(51) Int. Cl.: B01D 67/00, A41D 13/11, B01D 69/12, B01D 71/48, B01D 71/64, B01D 71/70, H01M 50/40

(54) **METHOD FOR FABRICATING NANOPOROUS THIN FILM, NANOPOROUS THIN FILM AND ITS APPLICATIONS**

(71) Applicant: Zhou, Xiang-Qian, 40237 Düsseldorf (DE); Rangelow, Ivo, 34225 Baunatal (DE)
(72) Inventor: ZHOU, Xiang-Qian, 40237 Düsseldorf (DE); RANGELOW, Ivo, 34225 Baunatal (DE)
(74) Representative: Manitz Finsterwald Patent- und Rechtsanwaltspartnerschaft mbB

(57) **Abstract**

The present disclosure relates to a method for manufacturing a nanoporous thin film, which comprises several steps: a material preparation process step, in that the film body used to manufacture the film is prepared or placed, and the film body is transferred to the imprinting station; a nanopore imprinting process step, in which an imprinting apparatus is used controllable to imprint an array of nanopores arranged in a predetermined manner on the film body, and penetrate into at least a portion of the thickness of the film body, wherein, the imprinting apparatus is provided with imprinting elements arranged in a predetermined array for forming the nanopores, and the imprinting elements are configured as an array of protruding structures on the imprinting mold; and a curing process step, in which the film body with imprinted nanopores is cured by a photochemical reaction or a thermochemical reaction through energy transfer by a light-emitting or heating device to form a film body with the desired mechanical strength. The fabricated thin films can be used in masks or protective clothing, air filtration devices, water or oil purification equipment, hemodialysis equipment, lithium batteries, or reverse osmosis membranes for seawater desalination.

## Description

### Technical field

The present disclosure generally relates to the field of nanomaterial preparation. In particular, the present disclosure relates to a method for manufacturing a nanoporous thin film, the manufactured nanoporous thin film and its application.

### Background techniques

Thin films used to filter particles such as ultrafine particles have a wide range of applications, for example, they can be used in masks or protective clothing to block virus particles, in air filtration devices to block contaminant particles in the air, in filtration equipment for hemodialysis equipment to filter blood, or in water or oil purification equipment to purify water or oil, or as separators in lithium batteries, or as reverse osmosis membranes for seawater desalination.

The films used for particle filtration usually contain a large number of small pores. On the one hand, these small pores must be able to allow fluids carrying particulate matter (such as air, water, oil or blood, etc.) to pass smoothly, and on the other hand, they must be able to effectively block the particulate matter that is expected to be filtered (e.g. virus particles, contaminant particles, impurity particles in water or oil, etc.). Therefore, the size of the pores is usually selected based on the size of the particulate matter to be filtered and the passage rate of the fluid carrying the particulate matter.

Generally speaking, the pore size of the film used to filter particulate matter is smaller than the particle size of the particulate matter to be filtered. As an example, KN95 masks currently available on the market can block about 95% of particles with a particle size of 0.3 microns or more. However, with the global epidemic caused by the COVID-19, it has been found that this kind of KN95 mask is not good at blocking the virus. Typical virus sizes are typically around 130 nanometers (0.13 microns), and while KN95 masks are effective at blocking viruses attached to other large particles such as droplets, individual virus particles can pass unimpeded through the KN95 mask and enter the human body, thus reducing the protective properties of KN95 masks. In early July 2020, 239 scientists issued a joint letter, emphasizing the seriousness of the spread of the COVID-19 in the air. It is because the droplets enter the air, the virus in the droplets can only be freed in the air after the water evaporates.

In order to effectively filter virus particles, the usual practice is to further reduce the pore size of the film. For example, current masks usually use single-layer or multi-layer meltblown cloth as the membrane filter material. The meltblown cloth is formed by randomly stacking microscopic fibers onto a porous substrate membrane material. Due to random accumulation, on the one hand, the pores in the meltblown cloth have different sizes (most of them are small enough, but still some of them are very large), which reduces the filtration efficiency of the meltblown cloth. On the other hand, the curved channel of the small pore in the meltblown cloth not only causes the ratio of the actual air permeable area of the small pore to the total area of the meltblown cloth to be greatly reduced, but also greatly increases the air resistance of the curved channel, thus making it difficult for users to breathe. In addition, the use of meltblown cloth makes the mask opaque, and wearing the mask damages the appearance of the face.

For this reason, it is desirable to obtain a nanoporous thin film, which not only has pores small enough and controllable pore size to achieve high efficiency filtration of ultrafine particles, but also has the desired low fluid resistance, so that fluid (such as Air) can pass smoothly, and the film material brings transparency.

In addition, lithium batteries are an important source and hope for clean energy in the world today. However, today's lithium batteries still cannot meet people's needs. Both the safety and energy density of lithium batteries are not satisfactory. One reason for this is the unsatisfactory lithium-ion battery separator. The separator must not only allow lithium ions to pass through without short-circuiting, but also prevent lithium dendrites from piercing the separator. The current lithium battery separator cannot meet the requirements of the ideal lithium battery in terms of material, process and structure. The diaphragm of lithium battery separator needs small holes through the lithium battery, which are currently stretched out by stretching technology. The stretched out pores vary in size, generally from 40 nm to 150 nm, and larger pore sizes cannot be ruled out. In order to pull out the nanoscale pores, the diaphragm material cannot be too hard, which makes the lithium dendrites easy to pierce the diaphragm, resulting in fire and explosion accidents due to lithium battery short-circuit. Therefore, there is a need for a diaphragm material that can overcome the shortcomings of the current lithium-ion battery separators, which should have a uniform small pore size (50 nm to 150 nm), as well as high temperature resistance and large hardness.

### Content of invention

One of the objects of the present disclosure is to provide a method for fabricating nanoporous thin film, the fabricated nanoporous thin film and its applications. The thin film and its manufacturing method according to the present disclosure can overcome at least one or more problems existing in the prior art.

In the first aspect of the present disclosure, a method for manufacturing the nanoporous thin film is provided. The method comprises the steps:
A material preparation process step: In this material preparation process step, the film body used to manufacture the film is prepared or placed, and the film body is transferred to the imprinting station;
A nanopore imprinting process step: In the nanopore imprinting process step, an imprinting apparatus is used controllable to imprint an array of nanopores arranged in a predetermined manner on the film body, which have the same or substantially the same pore diameters, and penetrate into at least a portion of the thickness of the film body, wherein, the imprinting apparatus is provided with imprinting elements arranged in a predetermined array for forming the nanopores, and the imprinting elements are configured as an array of protruding structures on the imprinting mold; and
A curing process step: In this curing process step, the film body with imprinted nanopores is cured by a photochemical reaction or a thermochemical reaction in which energy is transferred by a light-emitting or heating device to form a film body with the desired mechanical strength.

According to an embodiment of the present disclosure, the film body is a flexible solid, and the film body is transferred to the imprinting station by a transfer roller in the material preparation process.

According to an embodiment of the present disclosure, the film body is a liquid or a soft film body that is not suitable for transportation, and the film body in the form of a liquid or a soft film body will be attached to a substrate film with a certain mechanical strength in the material preparation process, and then the substrate film and the film body attached to it are transported to the imprinting station by a transfer roller.

According to an embodiment of the present disclosure, the imprinting apparatus comprises a first imprinting unit and a second imprinting unit, and the imprinting element is provided on at least one of the first imprinting unit and the second imprinting unit.

According to an embodiment of the present disclosure, the first imprinting unit and the second imprinting unit are both configured as imprinting rollers, and the film body is transferred between the first imprinting unit and the second imprinting unit, and nanopores are formed on the film body through the rotation and pressing of the first imprinting unit and the second imprinting unit relative to each other.

According to an embodiment of the present disclosure, the first imprinting unit is configured as an imprinting roller, and the second imprinting unit is configured as an imprinting plate, and the film body is transferred between the first imprinting unit and the second imprinting unit through the rotation and pressing of the first imprinting unit and the second imprinting unit relative to each other.

According to an embodiment of the present disclosure, the first imprinting unit and the second imprinting unit are both configured as imprinting plates, and the film body is transferred between the first imprinting unit and the second imprinting unit, and nanopores are formed on the film body through the translation and extrusion of first imprinting unit and the second imprinting unit towards each other, or through translation and extrusion of one of the first imprinting unit and the second imprinting unit towards the other of the first imprinting unit and the second imprinting unit.

According to an embodiment of the present disclosure, the film body is a liquid, and the film body in the liquid form is directly injected or sucked between the first imprinting unit and the second imprinting unit of the imprinting apparatus, meanwhile the film body is changed from liquid to solid or semi-solid by light curing or thermal curing, so that the nanopores are formed on the film body.

According to an example of the present disclosure, the film body is a polymeric liquid mixed with metal particles, and the metal particles are uniformly mixed into the surface and the inside of the film body.

According to an embodiment of the present disclosure, the imprinting element is configured to have a size and a peripheral shape substantially matching the nanopores to be formed.

According to an embodiment of the present disclosure, the imprinted element is constructed such that the ratio of its height to the maximum outer diameter is less than 5.

According to an embodiment of the present disclosure, in the curing process, the curing temperature is set between 100 degrees Celsius and 400 degrees Celsius.

According to an embodiment of the present disclosure, the imprinting apparatus comprises a first imprinting unit and a second imprinting unit, the first imprinting unit having a first imprinting element for imprinting micropores, and the second imprinting unit having a second imprinting element for imprinting nanopores. The method is a double-sided imprinting method, which includes simultaneously imprinting from two opposite surfaces of the film body with the first imprinting unit and the second imprinting element to imprint on one side of the film body to form nanopores and on the other side to form micropores.

According to an embodiment of the present disclosure, the imprinting apparatus comprises a first imprinting unit, a second imprinting unit and a third imprinting unit, the first imprinting unit having a first imprinting element, the second imprinting unit having a second imprinting element, and the third imprinting unit having a smooth surface without an imprinting element. The method is a double-sided imprinting method, which includes firstly using the first imprinting unit and the third imprinting unit to imprint micropores on one side of the film body, the micropores do not penetrate the film body and leave a diaphragm, and then imprinting nanopores using the first imprinting unit and the second imprinting unit on the diaphragm on the other side of the film body.

According to an embodiment of the present disclosure, one of the first imprinting unit and the second imprinting unit may be softer than the other.

According to an embodiment of the present disclosure, the first imprinting unit and the second imprinting unit may both be made of a hard material or may both be made of a soft material; or one of the first imprinting unit and the second imprinting unit may be made of a hard material while the other of a soft material.

According to an embodiment of the present disclosure, the nanoporous thin film may include multiple layers of film bodies imprinted with the nanopores and the micropores, wherein the adjacent film bodies can be arranged in a manner of nanopore facing to nanopore, or nanopore facing to micropore, or micropore facing to micropore.

According to an embodiment of the present disclosure, the method further comprises a pore treatment process, and the pore treatment process is used to make the imprinted nanopores penetrate the entire film body.

According to an embodiment of the present disclosure, the pore treatment process comprises a cooling/heating treatment step, which is carried out by performing a rapid cooling process on the film body coming out of the curing process, and the diaphragm portion of the film body that is not penetrated by the nanopores shrinks and ruptures rapidly with the aid of a rapid temperature change, so that the nanopores penetrate the entire film body.

According to an embodiment of the present disclosure, the cooling temperature in the cooling/heating treatment step is set between -100 degrees Celsius and 30 degrees Celsius.

According to an embodiment of the present disclosure, cooling/heating treatment step alternately heats and cools the film body imprinted with nanopores from the curing process, by means of rapid temperature changes, the part of the film body that is not penetrated by the nanopores is alternately expanded and contracted by thermal expansion and contraction, so that the nanopores penetrate the membrane body.

According to an embodiment of the present disclosure, the heating temperature in the cooling/heating treatment step is set between 100 degrees Celsius and 400 degrees Celsius, and the cooling temperature is set between -100 degrees Celsius and 30 degrees Celsius.

According to an embodiment of the present disclosure, the cooling/ heating treatment process is performed by spraying low-temperature gas on the surface of the film body, or by spraying low-temperature liquid nitrogen on the surface of the film body.

According to an embodiment of the present disclosure, the pore treatment process includes a plasma etching process, and the plasma etching process is used to reduce the thickness of the film body so that the part of the diaphragm that cannot be penetrated in the nanopore is thinned to penetrate.

According to an embodiment of the present disclosure, the pore treatment process comprises a plasma etching process, and the plasma etching process is used to reduce the thickness of the film body so that the nanopores penetrate the thinned film body.

According to an embodiment of the present disclosure, the plasma etching process comprises outputting RF generated by an RF power source in a vacuum reaction chamber to a coupling coil, mixing the etching gas in a proportion and causing it to be discharged by a coupled glow to produce a high density plasma, causing the plasma to bombard a thin film surface by the RF action of the lower electrode to interrupt the chemical bond of the thin film surface and generating volatile substances with the etching gas, causing the volatile substances to be removed from the film in the form of a gas and extracted from the pump line, thereby causing the portion of the film body not penetrated by the nanopores to be etched and thinned to the point of penetration, wherein the film body is brought into the vacuum environment required for the etching process by differential pumping technology.

According to an embodiment of the present disclosure, the film body is etched from the side imprinted with nanopores, or the film body is etched from the side without nanopores, or etched from the film body on both sides of the film body simultaneously.

According to an embodiment of the present disclosure, the pore treatment process includes a double-sided differential pressure process, and the double-sided differential pressure process is performed by injecting high-pressure gas from one side of the film body and is used to break with the help of the pressure difference between the upper and lower surfaces the part of the film body that is not penetrated by the nanopores, so that the nanopores penetrate the film body.

According to an embodiment of the present disclosure, the high-pressure gas is a pulsed high-pressure gas.

According to an embodiment of the present disclosure, a high-pressure spray head is used to spray high-pressure gas from one side of the film body, and two or more support rollers on the other side of the film body are employed to support the film body.

According to an embodiment of the present disclosure, the air pressure on the sides of the film body is measured using a pressure sensor to ensure that the pressure difference between the sides of the film body is within a desired range.

According to an embodiment of the present disclosure, the pore treatment process comprises a surface evaporation or vapor deposition step, and the surface evaporation or vapor deposition step is used to correct and adjust the diameter of the nanopores, in order to make the pore size of the nanopores smaller.

According to an embodiment of the present disclosure, the pore treatment process includes a gas permeability detection step, and the gas permeability detection step is used to detect the permeability of the nanopores in the film body.

According to an embodiment of the present disclosure, the gas permeability detection step comprises injecting high-pressure gas from one side of the film body to the surface of the film body, and detecting both sides of the film body by pressure sensors. The permeability is determined by comparing the pressure difference or the pressure ratio with the one of a standard membrane sample with known permeability. The smaller the differential pressure, the higher the film permeability.

According to an embodiment of the present disclosure, the gas permeability detection step comprises spraying high-pressure gas from one side of the film body to the surface of the film body, measuring the bending displacement of the film body, and the bending displacement is compared with the one of a standard membrane sample with known permeability to determine the permeability.

According to an embodiment of the present disclosure, the method further comprises a surface coating step, in which a metal layer is sprayed on the surface of the film body.

According to an embodiment of the present disclosure, the surface coating process, coating or particles are sprayed on the surface of the film body so that the film body has a sterilization and disinfection effect.

According to an embodiment of the present disclosure, the particles are silver particles.

According to an embodiment of the present disclosure, the surface coating step, a metal layer is sprayed on the surface of the film body to form the film body into a conductive film body.

According to an embodiment of the present disclosure, the method also comprises a pre-curing process, which is used to at least partially cure the film body by transferring energy to the film body using an energy device prior to the nano imprinting process.

According to an embodiment of the present disclosure, the energy device comprises a resistance wire capable of generating heat, an infrared emitting cover that emits infrared lights, or an ultraviolet lamp capable of emitting ultraviolet lights.

According to an embodiment of the present disclosure, the method further comprises a substrate film pasting step and/or a reeling step. The substrate film pasting step is used to enhance the mechanical properties of the film body by pasting a substrate film with pores on the upper and/or lower surface of the film body without affecting the air permeability. The reeling step is used to furl the finished film on a reel for storage or transportation.

According to an embodiment of the present disclosure, the pasted substrate film of the film body is peeled away from the film body prior to the reeling step, and the film body and the substrate film are reeled up separately.

In the second aspect of the present disclosure, a nanoporous thin film made using the methods of the present disclosure is provided. The film comprises a film body provided with a plurality of nanopores which are arranged in a predetermined array and penetrate the film body, wherein the plurality of nanopores have the same or substantially the same pore diameter, and wherein, the duty cycle of the nanopores on the unit area of the film is configured so that the film has a desired permeability.

According to an embodiment of the present disclosure, the thin film is used to filter ultrafine particles, and the pore sizes of the nanopores are all configured to be smaller than the size of the particles to be filtered.

According to an embodiment of the present disclosure, the nanopores are formed by imprinting or liquid casting.

According to an embodiment of the present disclosure, the pore diameter of the nanopores is between 30 nanometers and 300 nanometers.

According to an embodiment of the present disclosure, the nanopores of the film are in any one of the following shapes: circle, square, triangle, and hexagon.

According to an embodiment of the present disclosure, the nanopores are configured to have a duty cycle of up to 10% or more per unit area of the film.

According to an embodiment of the present disclosure, the film body is an organic polymer film body.

According to an embodiment of the present disclosure, the film body is transparent in the visible light but opaque in the ultraviolet light, so that the film can absorb ultraviolet radiation.

According to an embodiment of the present disclosure, the film body is any one of the following film bodies: polyimide film body, polyethylene terephthalate film body, polydimethylsiloxane film body, graphene film body.

According to an embodiment of the present disclosure, the film body is a flexible solid or liquid prior to the formation of the film.

According to an embodiment of the present disclosure, the thickness of the film body is more than 0.2 nm and less than 100 microns.

According to an embodiment of the present disclosure, the film may have a substrate film and the film body is attached to the substrate film.

According to an embodiment of the present disclosure, the substrate film is provided with a plurality of nanopores or micro-pores that are larger than the nanopores of the film body, or pores with larger diameter arranged in a predetermined array through the substrate film, the nanopores of the film body are at least partially connected to the nanopores or micro-pores, or pores with larger diameter of the substrate film.

According to an embodiment of the present disclosure, the film body of the film is provided with pores in a double-layer array, wherein, the plurality of nanopores are arranged in a first array on the first surface of the film body and penetrate the first thickness of the film body, and the plurality of micro-pores or pores with a larger particle diameter are arranged in a second array on a second surface of the film body opposite the first surface and through the second thickness of the film body, wherein at least the second thickness is less than the total thickness of the film body, and wherein the nanopores are at least partially connected to the micro-pores or pores with larger particle diameters.

According to an embodiment of the present disclosure, the film comprises multiple layers of alternately arranged film bodies and substrate films, wherein, each film body is provided with a plurality of nanopores arranged in a first array and penetrating the film body, and the pore diameters of the nanopores are all configured to be smaller than the particle size of the ultrafine particles to be filtered, wherein, each substrate film is provided with a plurality of micro-pores or pores with a larger particle diameter that are arranged in a second array and penetrate the substrate film, and wherein, the nanopores are at least partially connected to the micro-pores or pores with a larger particle diameter.

According to an embodiment of the present disclosure, the film body is sprayed with an insulating layer to be configured as an insulating film body.

According to an embodiment of the present disclosure, the film body is sprayed with a conductive layer to be configured as a conductive film body.

According to an embodiment of the present disclosure, the surface of the film body is sprayed with a germicidal coating or particles, so that the film has a sterilization and disinfection effect.

According to an embodiment of the present disclosure, the particles are silver particles.

According to an embodiment of the present disclosure, the surface of the thin film is sprayed with a hardness-enhancing layer.

According to an embodiment of the present disclosure, the film is a transparent or translucent film.

In the third aspect of the present disclosure, the applications of the nanoporous thin film are defined in one of the following: protective equipment being a mask, hood, protective clothing, or gloves; air filtration equipment for buildings or vehicles; water or oil purification equipment; hemodialysis equipment; lithium batteries or reverse osmosis membranes for seawater desalination.

It should be noted that the various aspects of the present disclosure described for one embodiment may be included in other different embodiments, although the other different embodiments are not specifically described. In other words, all the embodiments and/or features of any embodiment can be combined in any manner and/or combination, as long as they do not contradict each other.

### Description of the drawings

The invention is explained in the following by means of diagrams that show:
FIG. 1 to 6 show various structures of the nanoporous thin film according to different embodiments of the present disclosure;
FIG. 7a shows a schematic flow chart of a method for manufacturing the nanoporous thin film according to an embodiment of the present disclosure;
Fig. 7b shows a schematic device for manufacturing the nanoporous thin film according to an embodiment of the present disclosure;
FIG. 8, 9 and 10a and 10b respectively show various configurations of imprinting apparatus according to different embodiments of the present disclosure;
FIG. 11a and 11b show nanopores formed from single-sided and double-sided imprinted films, respectively;
FIG. 12a shows an imprinting apparatus with three imprinting units;
FIG. 12b shows the remaining diaphragm in the thin film imprinted by the double-sided imprinting method;
FIG. 13a and 13b show that the nanopores are broken during cooling/heating treatment;
FIG. 14 shows a schematic diagram of a double-sided differential pressure process according to the present disclosure;
FIG. 15 shows the basic principle of the plasma etching process according to the present disclosure;
FIG. 16 shows a schematic diagram of the process of pasting a substrate film according to the present disclosure.

It should be understood that in all the drawings, the same reference numerals denote the same elements. In the drawings, for clarity, the size of some features can be changed without being drawn to scale.

### Detailed description

The present disclosure will be described below with reference to the accompanying drawings, which illustrate certain examples of the present disclosure. It should be understood, however, that the present disclosure can be presented in many different ways and is not limited to the examples described below; in fact, the examples described below are intended to make the disclosure more complete and to provide those skilled in the art with a full explanation of the scope of protection of the present disclosure. It is also to be understood that the embodiments disclosed herein are capable of being combined in a variety of ways to provide more additional embodiments.

It should be understood that the terms in the specification are only used to describe specific embodiments and are not intended to limit the present disclosure. Unless otherwise defined, all terms (including technical terms and scientific terms) used in the specification have the meanings commonly understood by those skilled in the art. For brevity and/or clarity, well-known functions or structures may not be described in detail.

The singular forms "a", "the" and "this" used in the specification include plural forms unless clearly indicated. The terms "including" and "containing" used in the specification indicate the presence of the claimed feature, but do not exclude the presence of one or more other features. The term "and/or" used in the specification includes any and all combinations of one or more of the related listed items.

The terms "between X and Y" and "between about X and Y" used in the specification should be interpreted as including X and Y. The term "between about X and Y" used in this specification means "between about X and about Y", and the term "from about X to Y" used in this specification means "from about X To about Y".

In the specification, the terms "first", "second", or "third" are only used for convenience of description and are not intended to be limiting. Any technical features represented by "first", "second", or "third" are interchangeable.

In the specification, terms such as "up", "down", "front", "rear", "top", "bottom", etc. can describe the relationship between one feature and another feature in the drawings. It should be understood that, in addition to the orientation shown in the drawings, the terms of the spatial relationship also include different orientations of the device in use or operation. For example, when the device in the drawings is turned upside down, features that were originally described as being "below" other features can now be described as being "above" other features. The device can also be oriented in other ways (rotated by 90 degrees or in other orientations), and the relative spatial relationship will be explained accordingly.

The present disclosure relates to a nanoporous thin film, which can be used for filtering ultrafine particles, especially virus particles. The thin film may include a film body and a plurality of nanopores arranged on the film body. Compared with the traditional film similar to meltblown cloth, the nanopores of the film according to the present disclosure are arranged in a predetermined array in a controlled manner, have the same or substantially same pore size, and substantially straightly penetrate the film body of the film. On the one hand, the nanopores are not as diverse as on the meltblown cloth. On the other hand, the nanopores have a high duty cycle on the surface area of the film, and they have basically straight channels instead of being curved channels like the meltblown cloth. This not only enables the film of the present disclosure to almost 100% filter ultrafine particles with a particle size smaller than the nanopore pore size, but also allows the disclosed films to maintain the desired high permeability and low fluid resistance, thereby allowing fluids, such as air, to flow through the films smoothly at a desired flow rate.

For good implementation of the filtration, the pore size of each nanopore can be configured to be smaller than the particle size of the ultrafine particles to be filtered. For example, if the particle size of the ultrafine particles (including the particle size of typical viral particles) is between 50 nm and 400 nm, the pore size of each nanopore of the membrane according to the present disclosure can be set between 30 nm and 300 nm. It should be noted that in the present disclosure, "pore size" may represent the actual diameter of the nanopore (for round nanopores) or the aerodynamic diameter of the nanopore (for non-round nanopores, such as ellipsoidal, triangular, square, hexagonal, rhombic, or other polygonal nanopores).

In order to maintain the desired high permeability and low fluid resistance, the nanopores of the film according to the present disclosure are preferably arranged in a predetermined array and in a regular manner such that the nanopore duty cycle is at least greater than or equal to 10% per unit area of the film; and the nanopores preferably form substantially straight channels in a controlled manner. In the present disclosure, "duty cycle" refers to the void area of all nanopores on the film divided by the total area of the film. The larger the "duty cycle", the easier it is for fluid (such as air or water) to pass through the film. In the film according to the present disclosure, by regularly arranging the nanopores in a predetermined array, not only the duty ratio of the nanopores can be maximized as much as possible, but also the solid connection between the pores can be ensured. Unlike some prior art methods that use chemical methods to prepare films with nanopores, the nanopores in the film according to the present disclosure are mainly formed by imprinting, which is formed through an imprinting process with the aid of an imprinting device, which is a kind of physical preparation method and will be described in more detail below.

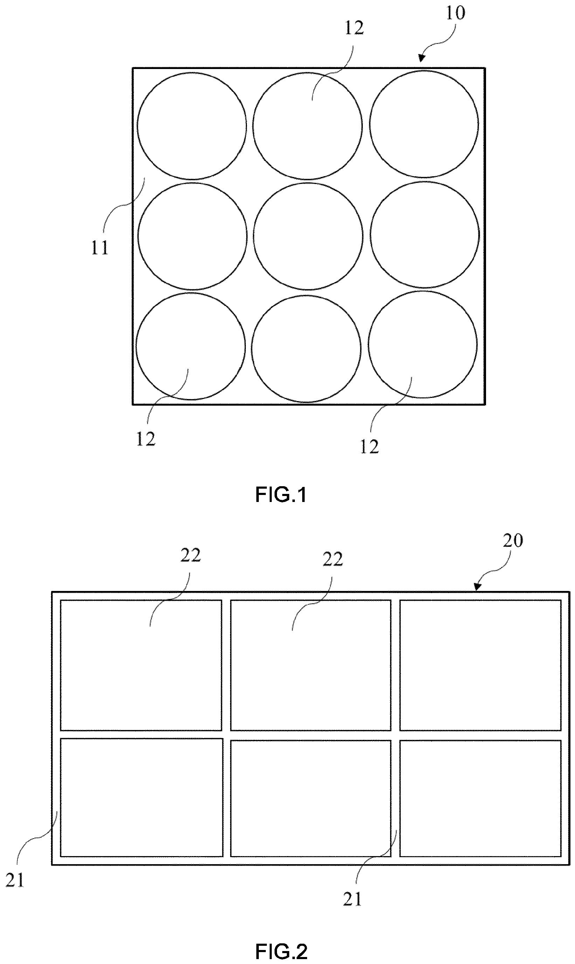

Referring to FIGS. 1 to 6 several different structures of nanoporous thin films according to the present disclosure are shown.

FIG. 1 shows a specific structure of a film 10 according to an embodiment of the present disclosure. The film 10 includes a film body 11 and a plurality of nanopores 12 arranged in a predetermined array and penetrating the film body 11. The plurality of nanopores 12 may be circular, and may have equal pore diameters. In the embodiment shown in FIG. 1, the plurality of nanopores 12 are arranged in multiple rows and multiple columns, and the centers of the nanopores in each row or column are substantially aligned on the same straight line. In the array shown in FIG. 1, under the premise of ensuring good film strength (that is, the connecting material between the holes does not break), the duty cycle of the nanopores 12 on the unit area of the film can be as high as 70% or more. Such a duty cycle is much higher than the one about 10% of melt blown cloth, so that the film 10 has a very low fluid resistance under the premise of ensuring good film strength, so that the fluid can pass through the film 10 smoothly. In addition, although not shown, the nanopores 12 may be arranged in other arrays on the film body 11. For example, the nanopores 12 can be arranged on the film body 11 such that each row of nanopores and adjacent rows of nanopores are arranged alternately with each other. Such an array can further increase the duty cycle of the nanopores 12 on the unit area of the film.

FIG. 2 shows a specific structure of the film 20 according to an embodiment of the present disclosure. The film 20 includes a film body 21 and a plurality of nanopores 22 arranged in a predetermined array and penetrating the film body 21. The plurality of nanopores 22 may have a square shape, and may have an equal size. In the embodiment shown in FIG. 2, the plurality of nanopores 22 are regularly arranged in rows and columns, and the nanopores on each row or column are substantially aligned with each other. In the array shown in Figure 2, under the premise of ensuring good film strength (that is, the connection material between the holes does not break), the duty cycle of the nanopore 22 on the unit area of the film can generally be more than 70%, or even as high as 80% or more. Such a duty cycle enables the film 20 to have a very low fluid resistance under the premise of ensuring a good film strength, so that the fluid can pass through the film 20 smoothly.

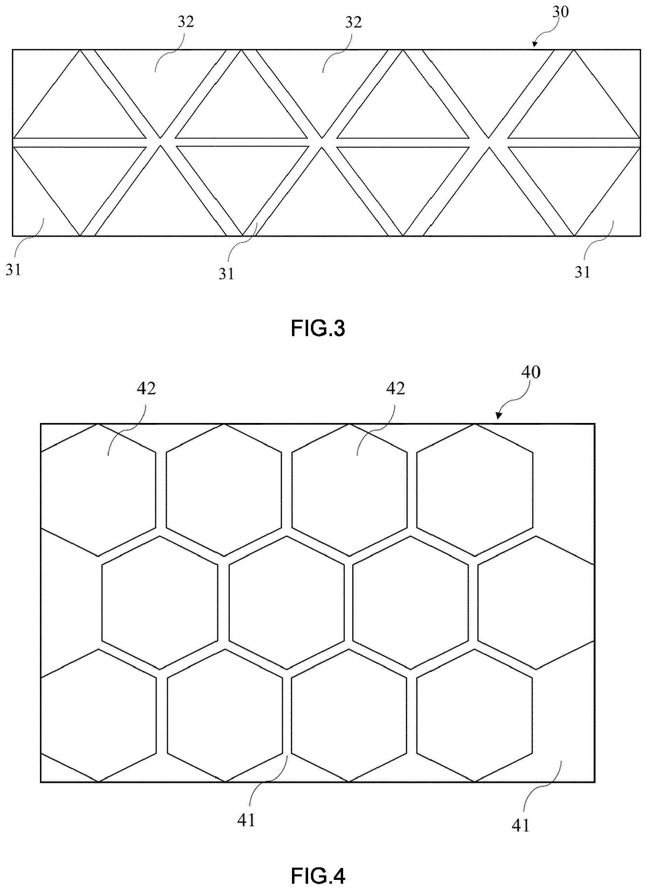

FIG. 3 shows a specific structure of the film 30 according to an embodiment of the present disclosure. The thin film 30 includes a film body 31 and a plurality of nanopores 32 arranged in a predetermined array and penetrating the film body 31. The plurality of nanopores 32 may be triangular (for example, equilateral triangle), and may have the same size. In the embodiment shown in FIG. 3, in order to maximize the duty cycle of the triangular nanopores 32 on the unit area of the film, the triangular nanopores 32 in each row are alternately arranged in a reverse order (e.g., the tip of the first nanopore 32 faces up, the tip of the second nanopore 32 faces down, the tip of the third nanopore 32 faces up, and so on), and the two rows of nanopores 32 adjacent to each other are arranged in mirror image of each other. In the array shown in Figure 3, under the premise of ensuring good film strength (that is, the connection material between the holes does not break), the duty cycle of the nanopore 32 on the unit area of the film can generally be more than 56%, or even as high as 69% or more. Such a duty cycle enables the film 30 to have a very low fluid resistance under the premise of ensuring a good film strength, so that the fluid can pass through the film 30 smoothly.

FIG. 4 shows the honeycomb specific structure of the film 40 according to an embodiment of the present disclosure. The film 40 includes a film body 41 and a plurality of nanopores 42 arranged in a predetermined array and penetrating the film body 41. The plurality of nanopores 42 may have a regular hexagonal shape and may have the same size. In the embodiment shown in FIG. 4, each row of nanopores 42 and adjacent rows of nanopores 42 are arranged alternately, so that the distance between the nanopores 42 is as close as possible. In the array shown in Figure 4, under the premise of ensuring good film strength (that is, the connection material between the holes does not break), the duty cycle of the nanopore 42 on the unit area of the film can generally be between 70% and 75%, even as high as 75% or more. Such a duty cycle enables the film 40 to have a very low fluid resistance under the premise of ensuring a good film strength, so that the fluid can pass through the film 40 smoothly.

The nanopores of the film according to the present disclosure can also be configured into other shapes, such as an ellipse, a rhombus, a regular pentagon, a regular heptagon, or any other suitable shapes, which will not be repeated herein.

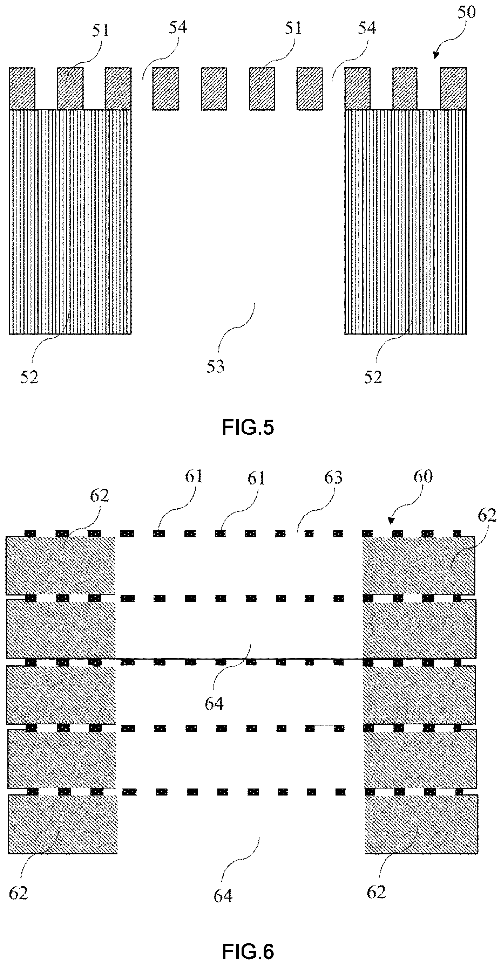

FIG. 5 shows a specific structure of a thin film 50 according to an embodiment of the present disclosure. The film 50 may include a film body 51 and a substrate film 52. The material of the substrate film can be different from the material used for the nanoporous film. The thickness of the substrate film 52 may be significantly greater than the thickness of the film body 51 and may allow the film body 51 to adhere to the substrate film 52 in any suitable manner, which may help to enhance the mechanical properties of the film body 51 as well as the entire film 50, so that the nanoporous film 50 will not be easily torn. In this embodiment, the substrate film 52 may be provided with a plurality of large pores 53 arranged in a predetermined array and penetrating the substrate film 52 (for example, the diameter of the large pores 53 is required to be much larger than the nanopores 54 of the film body 51, so the pores 53 may be micron-pores or pores of larger diameter). The nanopore 54 provided on the film body 51 is at least partially connected with the hole 53 provided on the substrate film 52 to ensure that the fluid can smoothly pass through the film.

In another embodiment according to the present disclosure, the film according to the present disclosure includes a second film in addition to the nanoporous film. The second layer of film is also a substrate film, but is a thicker film body (which is imprinted with the same material in a single step) made by combining it with the nanoporous film. In this embodiment, a double-layer array of holes may be provided in the film body. A plurality of nanopores can be arranged in a first array on the first surface (for example, called the upper surface) of the first layer of film body, and penetrate through the thickness of the first layer of film body, and the plurality of large pores (e.g., micron pores or pores of larger diameter) can be arranged in a second array on the second surface (such as the lower surface) of the second film opposite to the first film and penetrate the thickness of the second film body. The ultrafine particles to be filtered can pass through the macro-porous film layer but are prevented from passing through the nanoporous film layer; and the nanopores are at least partially connected with the macro-pores to ensure that the fluid can smoothly pass through the film. Such a structural design ensures that the film has good mechanical strength and can efficiently filter ultrafine particles and enable fluid to pass through the film smoothly. In addition, this structural design also facilitates the manufacture of films, which will be described in detail below.

FIG. 6 shows a specific structure of the thin film 60 according to an embodiment of the present disclosure. The film 60 may comprise multiple layers of alternatingly disposed nanoporous film bodies 61 and substrate films 62. The film body 61 and the substrate film 62 may be bonded together in any suitable manner, or the film body and the substrate film may not be bonded together but may be formed from the same material in a single operation. Each film body 61 is provided with a plurality of nanopores 63 arranged in a first array and penetrating the film body, and the pore diameters of the nanopores 63 are all configured to be smaller than the particle size of the ultrafine particles to be filtered. Each substrate film 62 is provided with a plurality of large pores 64 (such as micropores or pores with a larger diameter) arranged in a second array and penetrates the substrate film. The nanopores 63 are at least partially connected to the large pores 64 to ensure efficient filtration of ultrafine particles while allowing fluid to pass smoothly through the film 60. The thickness of the substrate film 62 can be significantly greater than the thickness of the nanoporous film body 61 to act as a mechanical support, and this structural design further enhances the mechanical strength of the film 60, allowing the film 60 to be better used in high-strength filtration equipment. In addition, this structural design also greatly increases the efficiency and reliability of the film 60 in filtering ultrafine particles, so that it can basically ensure the filtering effect, even if one film body 61 develops a crack or rupture, the other film bodies 61 can continue to block the ultrafine particles.

The film body of the film according to the present disclosure may be an organic polymer film body, such as a polyimide (PI) film body or a polyethylene terephthalate (PET) film body or a polydimethylsiloxane (PDMS) film body, or a non-organic polymer film body, such as a graphene film body. The film body of the film according to the present disclosure may be a flexible solid before the film is formed; it may also be a liquid, and the liquid may be solidified into a film body. The thickness of the film body of the film according to the present disclosure can be as thin as about 0.2 nanometers (almost the thickness of a single atomic layer), and it can also have a larger thickness, but is generally less than 100 micrometers. Since the film according to the present disclosure is very thin, it can be transparent or translucent. In addition, the surface of the film body of the film according to the present disclosure may be sprayed with coatings or particles (such as silver particles) to make the film have a sterilization and disinfection effect, which makes the film have additional advantages when applied to equipment such as masks or hemodialysis. The film body of the thin film according to the present disclosure can be configured to be insulated, and the insulated film body can be applied to some filtering devices that require the generation of static electricity. The film body of the thin film according to the present disclosure can also be configured to be conductive, which can be achieved by doping conductive particles into the film body, or by spraying a metal film on the surface of the film body, and the conductive film body will not generate static electricity.

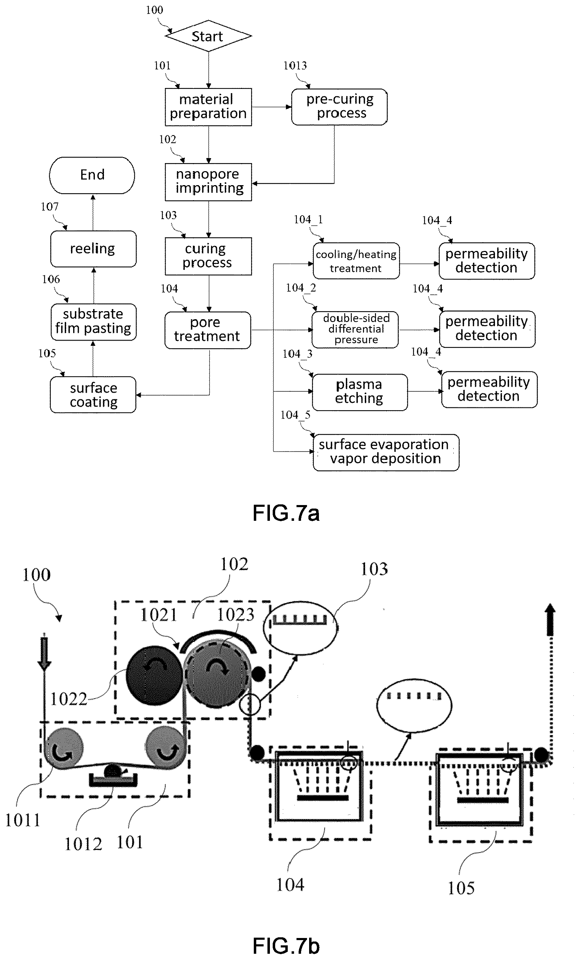

Referring to FIGS. 7a and 7b, the method 100 for manufacturing the thin film according to the present disclosure and the related device for implementing the method are described in detail. As mentioned previously, unlike some prior art that employs chemical methods to fabricate thin films with nanopores, the present disclosure primarily employs physical methods to fabricate thin films with nanopores. Specifically, the method 100 according to the present disclosure may include at least one or more of the following steps: material preparation process 101; nanopore imprinting process 102; curing process 103; optional pore treatment process 104, which is used to further process the imprinted nanopores to ensure that the nanopores penetrate the film and have a controllable and desired pore size; optional surface coating process 105; optional substrate film pasting process 106; and optional reeling process 107. Each process of the method 100 is described in detail below.

In the material preparation process 101, a thin film body for manufacturing the thin film according to the present disclosure is prepared or placed at a material preparation station. In an embodiment according to the present disclosure, the thin film body may be a flexible solid. In this case, the thin film body in the form of a flexible solid can be directly transferred to the imprinting station through one or more transfer rollers 1011 to perform the nanopore imprinting process 102. In another embodiment according to the present disclosure, the thin film body may be liquid, in which case a substrate is required to carry the thin film body in liquid form. Specifically, during the transfer process, the substrate is firstly passed through the liquid tank 1012 containing the liquid film body, so that the liquid film body is uniformly attached to the substrate and moves with the substrate; after that, the substrate with the liquid film body attached to it is transferred to the imprinting station by the transfer roller to perform the nanopore imprinting process 102. The liquid film body can also be directly connected between the primary imprinting roller (plate) 1022 and the secondary imprinting roller (plate) 1023 mentioned later, and the liquid film body is introduced between the imprinting molds by the capillary effect.

In another embodiment according to the present disclosure, before the imprinting process 102 of nanopores is implemented, in order to present a certain solidification of the thin film body (especially when the thin film body is a liquid) so that it can maintain the imprinted stereotyped structure after being imprinted, the material preparation process 101 may further include a pre-curing process 1013 for enhancing the curing strength of the film body to form a semi-liquid state or a solid state of the film body to facilitate the imprinting. In the pre-curing process 1013, the film body can be cured by transferring energy using an energy device. The energy device may include a UV lamp that emits UV light for UV annealing or a resistance wire that emits heat or an infrared emitter that emits infrared light for hot embossing.

In the nanopore imprinting process 102, an imprinting apparatus 1021 is used to imprint nanopores on the thin film body conveyed to it. The imprinting apparatus 1021 may comprise a first imprinting unit 1022 (primary imprinting roller or primary imprinting plate) and a second imprinting unit 1023 (secondary imprinting roller or secondary imprinting plate), wherein at least one of the first imprinting unit 1022 and the second imprinting unit 1023 is provided with an imprinting element for imprinting the nanopores. The imprinting elements may have a micro-sized or nano-sized shape of conical or cylindrical projections, have a size and a peripheral shape that substantially match the nanopores to be imprinted, and are arranged in a predetermined array. When the thin film body is transported between the first imprinting unit 1022 and the second imprinting unit 1023, nanopores are formed in the film body with the aid of imprinting elements by the squeezing action of the first imprinting unit and the second imprinting unit.

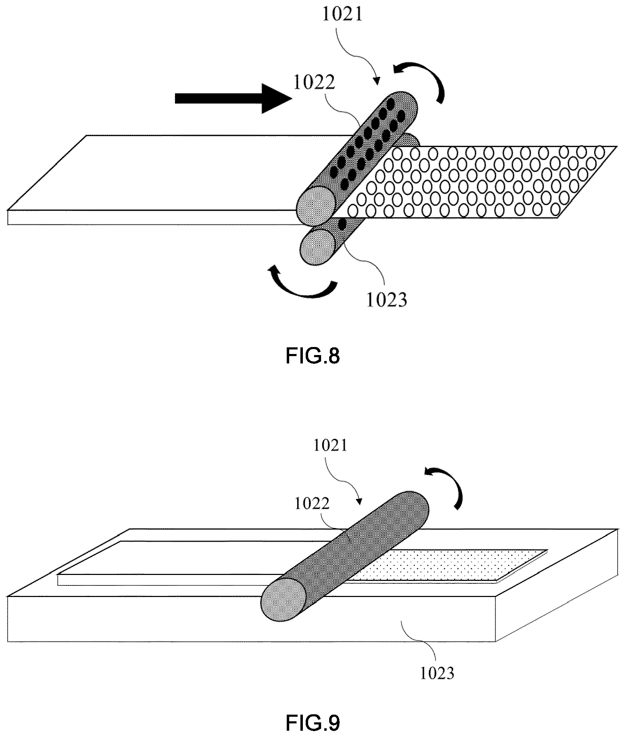

In an embodiment according to the present disclosure, both the first imprinting unit 1022 and the second imprinting unit 1023 of the imprinting apparatus 1021 are constructed as imprinting rollers (as shown in FIGS. 8), and the imprinting element may be disposed on at least one of the first imprinting unit and the second imprinting unit or on both. The first imprinting unit and the second imprinting unit in the form of imprinting rollers rotate in opposite directions to imprint nanopores in the film body and also transfer the structured imprinted film body towards the next station.

In another embodiment according to the present disclosure, the first imprinting unit 1022 of the imprinting apparatus 1021 may be constructed as an imprinting roller, and the second imprinting unit 1023 of the imprinting apparatus 1021 may be constructed as an imprinting plate (as shown in FIG. 9). The imprinting element may be disposed on at least one of the first imprinting unit and the second imprinting unit or on both. Preferably, the imprinting element can be disposed on the first imprinting unit 1022 in the form of an imprinting roller. During imprinting, the film body is transferred between the first imprinting unit 1022 and the second imprinting unit 1023 of the imprinting apparatus 1021, and nanopores are imprinted on the film body by rotating the first imprinting unit 1022 in the form of an imprinting roller, and the imprinted film body is transferred toward the next station at the same time.

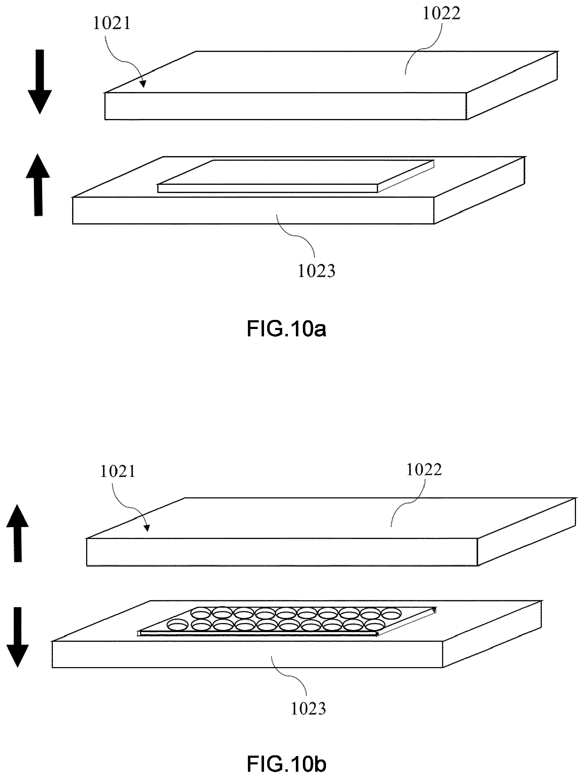

In yet another embodiment according to the present disclosure, both the first imprinting unit 1022 and the second imprinting unit 1023 of the imprinting apparatus 1021 are constructed as imprinting plates (as shown in FIGS. 10a and 10b). The imprinting element may be disposed on at least one of the first imprinting unit and the second imprinting unit or on both. In this embodiment, the first imprinting unit 1022 and the second imprinting unit 1023 of the imprinting apparatus 1021 may be configured to be able to translate toward and away from each other. As shown in Figure 10a, when imprinting is performed, the film body is first transferred between the first imprinting unit 1022 and the second imprinting unit 1023 , then the first imprinting unit 1022 and the second imprinting unit 1023 are translated toward each other, or one of the first imprinting unit 1022 and the second imprinting unit 1023 is translated toward the other, until they touch each other, thus, nanopores are imprinted on the thin film body located between imprinting units by means of imprinting elements. After that, the first imprinting unit 1022 and the second imprinting unit 1023 are translated away from each other, or one of the first imprinting unit 1022 and the second imprinting unit 1023 is translated away from the other. Then the imprinted film body is released and transferred to the next station. The new film body to be imprinted is transferred between the first imprinting unit 1022 and the second imprinting unit 1023 for the next imprinting operation.

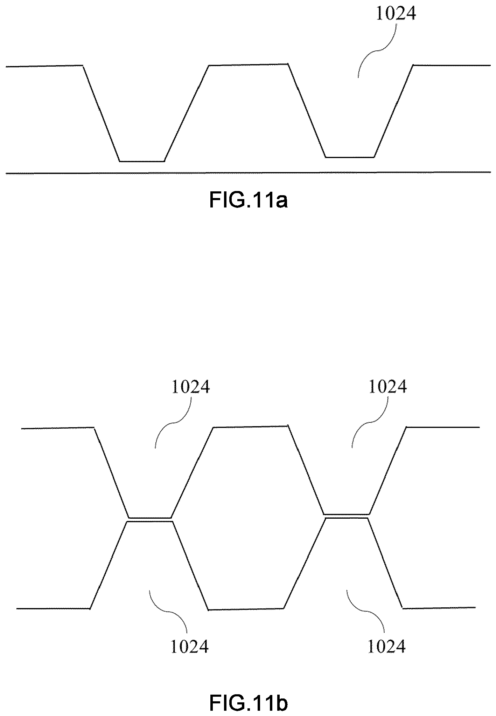

It is worth noting that, in the embodiment according to the present disclosure, the first imprinting unit 1022 and/or the second imprinting unit 1023 of the imprinting apparatus 1021 may be flexible in order to avoid damaging the imprinting element. In addition, when the imprinting element is positioned on only one of the first imprinting unit 1022 and the second imprinting unit 1023 of the imprinting apparatus 1021, the nanopores 1024 will be imprinted on the side of the film body facing the imprinting element (as shown in FIG. 11a); And when the imprinting elements are simultaneously positioned on the first imprinting unit 1022 and the second imprinting unit 1023 of the imprinting apparatus 1021, the nanopores 1024 will be imprinted on both sides of the film body (as shown in FIG. 11b).

It is worth stating that, in embodiments according to the present disclosure, the first imprinting unit 1022 and the second imprinting unit 1023 may be first imprinted against each other, so that the imprinting element on the first imprinting unit and the imprinting element on the second imprinting unit are contacted to each other. That is, there is no gap between the opposite ends of the imprinting element on the first imprinting unit and the imprinting element on the second imprinting unit. And then the film body in the form of a liquid is sucked in (e.g. through the capillary effect). In this way, the imprinted nanoporous film not only forms an array of imprint pores on the upper and lower surfaces, but also the possibility of leaving a residual diaphragm between the imprint pores inserted into the upper and lower surfaces is greatly reduced.

In the nanopore imprinting process 102, depending on the thickness of the film body, the formed nanopores can directly penetrate the film body (when the film body is very thin), or may penetrate only part of the thin film body (when the thin film body is thick) leaving a diaphragm so deep that the small pores do not penetrate, and will be further processed in the pore treatment process 104, as described in detail below.

In the curing process 103, the thin film body that has been imprinted with nanopores is transferred to the curing station for further curing to form a film body with the desired mechanical strength. Similar to the pre-curing process 1013, in the curing process 103 the thin film body imprinted with nanopores can be completely cured to a final state by transferring energy through a photochemical reaction with a light emitting device or a thermochemical reaction with a heat emitting device. The curing process 103 can also produce curing of the thin film body by emitting ultraviolet light from an ultraviolet light emitting device to the thin film body imprinted with nanopores. The ultraviolet light emitting device may include an ultraviolet lamp capable of emitting ultraviolet lights. The heating device may include a resistance wire heating device or an infrared emitting cover capable of emitting infrared lights.

The curing process 103 is necessary for the thin film body that is initially liquid. However, it can also be used for the thin film body that is initially flexible and solid to further harden it and enhance its mechanical strength. In the curing process 103, the curing temperature may be set between, for example, 100 degrees Celsius and 400 degrees Celsius. The curing process 103 may also be performed simultaneously with the nanopore imprinting process 102. In other words, the curing station may be merged into the imprinting station, thereby allowing the curing process 103 to be performed while the nanopores are imprinted in the imprinting station.

As mentioned above, in some cases, the nanopores formed in the nanopore imprinting process 102 only penetrate a part of the film body but do not penetrate the film body completely. This is caused by the following reasons: in order to form nanopores in the film body, the imprinting element disposed on the imprinting apparatus 1021 must meet a certain aspect ratio, i.e., the ratio of the height of the imprinting element to the maximum outer diameter. Typically, this aspect ratio needs to be less than 5. For nanopores with a pore size of 60 nanometers, the maximum height of the imprinting element is usually less than 300 nanometers. In other words, the imprinting element can only imprint nanopores with a depth of less than 300 nanometers on the film body. Under the current technical conditions, for a film body with a cross-section of 30 cm long, a thickness of 10 microns or more is generally required to make it strong enough to meet the requirements for processing and transportation and for the subsequent use of the film without deformation. Therefore, the thickness of current thin film body is typically 10 microns or more, thus allowing the nanopores imprinted on them to penetrate only a portion of the thickness of the thin film body and not completely through it. For this reason, the double-sided imprinting method of the present disclosure solves this problem.

In the double-sided imprinting method according to the present disclosure, an array of small pores of different diameters is simultaneously imprinted on both sides of a film body at the imprinting station using a first imprinting unit (primary imprinting roller or plate) and a second imprinting unit (secondary imprinting roller or plate) to which imprinting elements (also known as imprint molds) are attached at the same time. Among them, one side has an array of nanopores and one side has an array of micropores, and in which the two sides of the pressed nanopores and micropores are interconnected, i.e.: there is no diaphragm in the middle. The nanopores imprinted according to the double-sided imprinting method of the present disclosure are used to achieve the performance of filtering ultrafine particles, while the micropores make it possible to imprint a combination of connected nanopores and micropores throughout the entire film body using a large size imprinting element on a film body that is sufficiently thick and therefore has sufficient mechanical strength. For example, one side of an array of nanopores has a perforation depth of three times the diameter of the nanopore, and for a 60-nm pore size, the imprint depth can be as deep as 180 nm. On the other side of the film, arrays of micro-pores with a perforation depth of 10 microns or greater can be easily imprinted with a 5-micron diameter imprinting element. Thus, the total imprinted thickness of the first imprinted part and the second imprinted part can be up to 10 + 0.18 µm = 10.18 µm (Figure 5), solving both the problem of the thin film nanopore array and the problem of imprinting film body with a thickness of more than 10 µm.

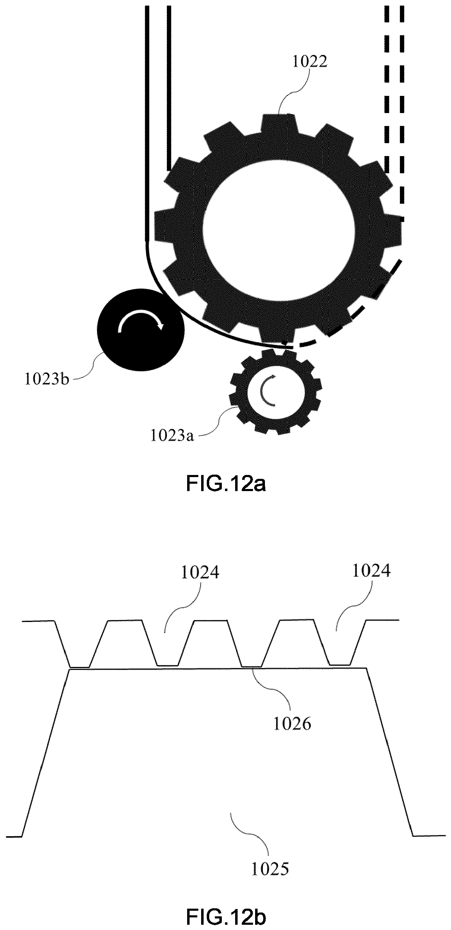

In the double-sided imprinting method according to an embodiment of the present disclosure, the imprinting apparatus 1021 used may include a first imprinting unit 1022, a second imprinting unit 1023a, and a third imprinting unit 1023b (as shown in FIG. 12a). In a preferred embodiment, the first imprinting unit 1022, the second imprinting unit 1023a, and the third imprinting unit 1023b are all configured in the form of an imprinting roller. The first imprinting unit 1022 may be provided with a first imprinting element for imprinting micropores, the second imprinting unit 1023a may be provided with a second imprinting element for imprinting nanopores, and the third imprinting unit 1023b can have a smooth surface with a certain hardness without any imprinting elements. During double-sided imprinting, micropores are first imprinted on one side of the film with the aid of the first imprinting unit 1022 and the third imprinting unit 1023b, and then nanopores are imprinted on the other side of the film that has been imprinted with the aid of the first imprinting unit 1022 and the second imprinting unit 1023a. During double-sided imprinting, the distance between the first imprinting unit 1022 and the third imprinting unit 1023b is adjusted to be able to imprint micropores with a predetermined depth on one side of the film without pressing through the film, thereby a layer of non-penetrating diaphragm with a thickness of tens of nanometers to hundreds of nanometers is left on the film, thereby forming a structure with both micropores and non-penetrating diaphragm. The film which has been imprinted by the first imprinting unit 1022 and the third imprinting unit 1023b and which also surrounds the first imprinting unit 1022 is transferred to a position between the first imprinting unit 1022 and the second imprinting unit 1023a. At this position, nanopores are imprinted on the other side of the film with the aid of the second imprinting unit 1023a on the non-penetrating diaphragm, thereby completing two-sided imprinting. In general, with this imprinting apparatus and the double-sided imprinting method, it is possible to imprint nanopores with micropores running through them directly on the film without further processing.

In the double-sided imprinting method according to an embodiment of the present disclosure, one of the first imprinting unit and the second imprinting unit may be softer than the other.

In the double-sided imprinting method according to an embodiment of the present disclosure, the first imprinting unit and the second imprinting unit may both be made of a hard material or may both be made of a soft material; or one of the first imprinting unit and the second imprinting unit may be made of hard a material while the other of a soft material.

In the double-sided imprinting method according to an embodiment of the present disclosure, the nanoporous thin film may include multiple layers of film bodies imprinted with the nanopores and the micropores, wherein the adjacent film bodies can be arranged in a manner of nanopore facing to nanopore, or nanopore facing to micropore, or micropore facing to micropore.

Of course, in some cases, in the film made by the double-sided imprinting method, there may still be a thin membrane 1026 remaining between the nanopores 1024 and the micropores 1025 (see Figure 12b).How to remove this thin diaphragm is the job of the pore treatment process 104.

The pore treatment process 104 is needed to further process the residual diaphragm of the nanopores so that the nanopores penetrate the entire thin film body. Of course, with further development of the technology, if the thickness of the film body can be further reduced to the nanometer level, the imprinting mold can directly penetrate the film body without the need for double-sided imprinting process of the formed nanopores.

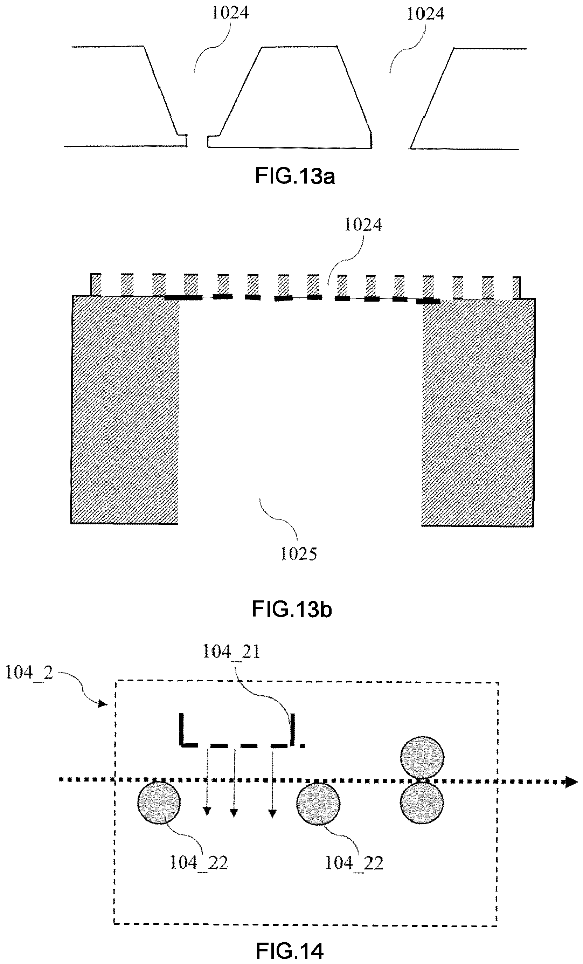

In the pore treatment process 104, a number of different processes can be used to eliminate the diaphragm so that the nanopores penetrate the entire film body. The first process may be a cooling/heating treatment process 104_1, which can be performed by performing a rapid cooling process on the film body coming out of the curing process 103. By rapidly cooling the film body at a high temperature the diaphragm portion of the film body that is not penetrated by the nanopores can be ruptured with the aid of a rapid temperature change, so that the nanopores penetrate the entire film body or the diaphragm shrinks and ruptures (as shown in FIGS. 13a and 13b). The film body can also be rapidly heated and cooled repeatedly and alternately, so that the film body of the non-penetrated part of the nanopores can be rapidly expanded and shrunk due to the alternating temperature changes. In the cooling/heating treatment process 1041, the cooling temperature may be set between -100 degrees Celsius and 30 degrees Celsius. If the film body is heated and cooled alternately, the heating temperature can be set between 100 degrees Celsius and 400 degrees Celsius, and the cooling temperature can be set between -100 degrees Celsius and 30 degrees Celsius.

In an embodiment according to the present disclosure, cooling and heating may be achieved by spraying low temperature gas and high temperature gas to the surface of the film body, respectively. The frequency and duration of alternate injection of low temperature gas and high temperature gas can be controlled to achieve the desired effect. In addition, when the cooling temperature is very low, it can also be achieved by spraying low-temperature liquid nitrogen or other low-temperature liquid onto the surface of the film body.

The second process may be a double-sided differential pressure process 104_2. In the double-sided differential pressure process, high-pressure gas (e.g. pulsed high-pressure gas) is injected from one side of the film body, and the pressure difference between the top and bottom surfaces of the film body ruptures the part of the film body that is not penetrated by the nanopores, thereby forming nanopores that penetrate the entire film body. As shown in FIG. 14, high-pressure spray heads 104_21 can be used to inject high-pressure gas from the side of the film body where the nanopores are imprinted. At least two or more support rollers 104_22 may be provided on the other side of the film body to support the film body during the injection of high pressure gas to ensure that the high pressure gas does not cause damage to the film body itself. In the process of implementing the double-sided differential pressure process 104_2, a pressure sensor can be used to measure the air pressure on both sides of the film body to ensure that the pressure difference on both sides of the film body is within a desired pressure range.

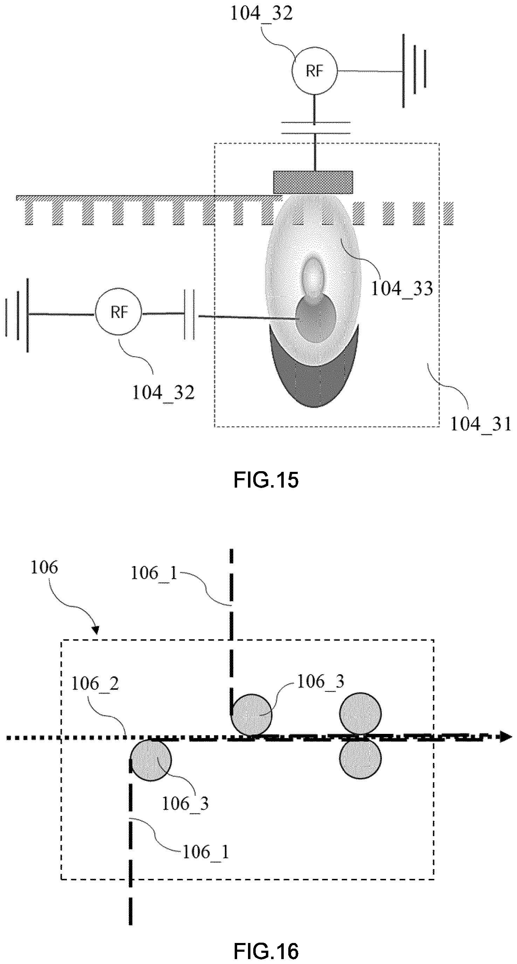

The third process may be the plasma etching process 104_3. The plasma etching process is used to reduce the film body, so that the nanopores penetrate the thinned film body. Fig. 15 shows a schematic diagram of the plasma etching process. In the vacuum reaction chamber 104 31, the radio frequency output generated by the radio frequency power supply is supplied to the coupling coil, and a certain proportion of the mixed etching gas is coupled to glow discharge to generate high-density plasma 104_33. Under the radio frequency (RF) action of the RF emitter 104_32 at the lower electrode, these plasmas 104_33 bombard the surface of the film, breaking the chemical bonds on the surface of the film and generating volatiles with the etching gas. The volatiles are removed from the film in gas form and pumped away from the vacuum piping, so that the part of the film body that is not penetrated by the nanopores is etched and thinned. In this process, when the film in the atmosphere is introduced into the vacuum plasma etching device, the film can be brought into the required vacuum environment in the etching machine by the etching process through the differential pumping technology. In this process, the film body can be etched from the side imprinted with nanopores, or the film body can be etched from the side not imprinted with nanopores, or the film body can be etched from both sides simultaneously.

In the pore treatment process 104, one of the first, second, and third processes described above can be used to make the nanopores penetrate the film body, or a combination of the first, second, and/or third processes may be used. For example, a plasma etching process can be used to partially reduce the film body, and then a cooling/heating treatment process can be used to make the nanopores penetrate through the film body by thermal expansion and contraction, or a double-sided differential pressure process can be used to make the nanopores penetrate through the film body by pressure difference, which is especially useful for thicker film body. In addition, it is possible to reduce the thickness of the thin film body by first using a cooling/heating treatment process or a double-sided differential pressure process to penetrate the nanopores and then using a plasma etching process to reduce the thickness of the film body.

In another embodiment according to the present disclosure, after adopting the first process, the second process, or the third process, the air permeability detection process 104_4 can be used to detect the air permeability of the film body and thereby inspect the permeability of the nanopores in the film body. Specifically, similar to the two-sided differential pressure process, in the permeability detection process, a high-pressure gas is injected onto the surface of the film body on one side of the film body, and due to the presence of nanopores, some of the gas will flow through the nanopores to the other side of the film body. The greater the permeability of the nanopores, the more gas will flow more easily to the other side of the film body, resulting in a smaller pressure difference between the two sides of the film body. Based on this principle, the pressure sensor can be used to detect the pressure on both sides of the film body and calculate the pressure difference between the two sides of the film body or the ratio of the pressure on both sides of the film body. The pressure difference or the pressure ratio can be compared with a standard membrane sample with known permeability to determine the permeability of the nanopores in the film body. On the other hand, due to the existence of the pressure difference on both sides of the film body, the film body will be bent to a certain extent. The smaller the pressure difference between the two sides of the film body, the smaller the degree of bending of the film body. Therefore, the permeability of the nanopores in the film body can also be determined by measuring the degree of bending or displacement and comparing the measured degree of bending or displacement with that of a standard membrane with known duty cycle or permeability.

In the method 100 according to the present disclosure, nanopores that extend into a portion of the thickness of the film body are formed on a thicker film body by an imprinting process 102, and then the nanopores penetrate through the entire film body by thinning or partially rupture of the film body with the aid of a pore treatment process 104, making it possible to form nanopores on the thicker film body by a physical means.

In an embodiment according to the present disclosure, the pore treatment process 104 may further include a surface evaporation or vapor deposition process 104_4. When the pore diameter of the nanopores formed on the film body is larger than the predetermined pore diameter, the surface of the film body can be thickened by evaporation on the surface of the film body or by chemical or physical vapor deposition, which can laterally thicken the surrounding part of the nanopores, resulting in a smaller actual pore size. The process allows for further modification and adjustment of the imprinted nanopores to ensure that the nanopores are obtained with a controlled and desired pore size.

The film body formed after the pore treatment process 104 can be used directly, or it can be further subjected to the surface coating process 105 for additional use. For example, in the surface coating process 105, silver particles may be sprayed on the surface of the film body to make the film body have the effect of sterilization and disinfection. The surface coating process 105 can be implemented in a surface coating device, which can include a vacuum chamber in which the metal to be coated is evaporated and deposited on the surface of the film body. When the film in the atmosphere is introduced into the vacuum coating device, the film can enter the vacuum environment required for coating through the differential pumping technology. In addition, as mentioned above, in the surface coating step 105, a metal layer may be coated on the surface of the film body to form the film body into a conductive one.

In an embodiment of the present disclosure, the final film body needs to be increased to a certain thickness to archive the mechanical properties for storage, transportation, etc. Thus, the method of the present disclosure may further comprise the substrate film pasting process 106. In the substrate pasting process 106, the mechanical properties of the film body are enhanced by pasting a substrate film to the upper and/or lower surface of the film body. In order to ensure the air permeability of the film body pasted with the substrate film, the substrate film is usually provided with micropores or larger-sized pores whose pore diameter is much larger than the nanopores on the film body. FIG. 16 shows a schematic diagram of the substrate pasting process 106. One or both of the substrate films 106_1 are conveyed from either or both sides of the film body 106_2 via the transfer roller 106_3 to a position where they converge with the film body 106_2, where the film body 106_2 may be pasted directly to the substrate film 106_1 or to the substrate film 106_1 under the pressure of the transfer roller 106_3. To strengthen the adhesion of the film body 106_2 to the substrate film 106_1, the substrate film 106_1 may be precoated with an adhesive. The final film can be furled onto a reel in the reeling process 107 for storage or transportation.

Between the above processes the film body can be transported by rollers. As required, the method 100 according to the present disclosure may only include some but not all of the above mentioned processes 101 to 107. In addition, according to actual demands, the processes 101 to 107 of the method 100 according to the present disclosure may be performed in any appropriate order without departing from the protection scope of the present disclosure.

The nanoporous thin films according to the present disclosure have a wide range of applications. In an embodiment according to the present disclosure, the nanoporous thin films according to the present disclosure may be applied in protective equipment, such as masks (especially anti-virus masks), hoods, protective clothing, gloves, etc. In this application, either a single-layer film or a multilayer film can be used. In another embodiment according to the present disclosure, the nanoporous thin films according to the present disclosure can also be used in air purification devices for buildings or vehicles, in filtration equipment for hemodialysis apparatus, and in purification equipment for water or oil. In yet another embodiment, the nanoporous thin films according to the present disclosure may also be used as a separator in a lithium battery. The thin films of the present disclosure are particularly suitable for applications as separators in lithium-ion batteries, which require a controlled-sized, uniform array of nanopores.

Exemplary embodiments according to the present disclosure are described above with reference to the accompanying drawings. However, those of skill in the art should understand that a variety of variations and changes can be made to the exemplary embodiments of the present disclosure without departing from the spirit and scope of the present disclosure. All variations and changes are included within the scope of protection of the disclosure as limited by the claims. The present disclosure is limited by the appended claims and the equivalents of those claims are included.

## Claims

1. A method for manufacturing a nanoporous thin film, wherein the method comprises the steps:
A material preparation process step: In the material preparation process step, the film body used to manufacture the film is prepared or placed, and the film body is transferred to the imprinting station;
A nanopore imprinting process step: In the nanopore imprinting process step, an imprinting apparatus is used controllable to imprint an array of nanopores arranged in a predetermined manner on the film body, which have the same or substantially the same pore diameters, and penetrate into at least a portion of the thickness of the film body, wherein, the imprinting apparatus is provided with imprinting elements arranged in a predetermined array for forming the nanopores, and the imprinting elements are configured as an array of protruding structures on the imprinting mold; and
A curing process step: In this curing process step, the film body with imprinted nanopores is cured by a photochemical reaction or a thermochemical reaction in which energy is transferred by a light-emitting or heating device to form a film body with the desired mechanical strength.

2. The method according to claim 1, wherein the film body is a flexible solid, and the film body is transferred to the imprinting station by a transfer roller in the material preparation process; and/or
wherein the film body is a liquid or a soft film body that is not suitable for transportation, and the film body in the form of a liquid or a soft film body will be attached to a substrate film having a certain mechanical strength in the material preparation process, and then the substrate film and the film body attached to it are transported to the imprinting station by a transfer roller, and/or
wherein the imprinting apparatus comprises a first imprinting unit and a second imprinting unit, and the imprinting element is provided on at least one of the first imprinting unit and the second imprinting unit, in particular
wherein the first imprinting unit and the second imprinting unit are both configured as imprinting rollers, and the film body is transferred between the first imprinting unit and the second imprinting unit, and nanopores are formed on the film body through the rotation and pressing of the first imprinting unit and the second imprinting unit relative to each other; and/or
wherein the first imprinting unit is configured as an imprinting roller, and the second imprinting unit is configured as an imprinting plate, and the film body is transferred between the first imprinting unit and the second imprinting unit, and nanopores are formed on the film body through the rotation and pressing of the first imprinting unit and the second imprinting unit relative to each other; and/or
wherein the first imprinting unit and the second imprinting unit are both configured as imprinting plates, and the film body is transferred between the first imprinting unit and the second imprinting unit, and nanopores are formed on the film body through the translation and extrusion of first imprinting unit and the second imprinting unit towards each other, or through translation and extrusion of one of the first imprinting unit and the second imprinting unit towards the other of the first imprinting unit and the second imprinting unit; and/or
wherein the film body is a liquid, and the film body in the liquid form is directly injected or sucked between the first imprinting unit and the second imprinting unit of the imprinting apparatus, meanwhile the film body is changed from liquid to solid or semi-solid by light curing or thermal curing, so that the nanopores are formed on the film body.

3. The method according to claim 1 or claim 2, wherein the film body is a polymeric liquid mixed with metal particles, and the metal particles are uniformly mixed into the surface and the inside of the film body.

4. The method according to any one of claims 1 to 3, wherein the imprinting element is configured to have a size and a peripheral shape substantially matching the nanopores to be formed; and/or
wherein the imprinted element is constructed such that the ratio of its height to the maximum outer diameter is less than 5; and/or
wherein in the curing process, the curing temperature is set between 100 degrees Celsius and 400 degrees Celsius.

5. The method according to any one of claims 1 to 4, wherein the imprinting apparatus comprises a first imprinting unit and a second imprinting unit, the first imprinting unit having a first imprinting element for imprinting micropores, and the second imprinting unit having a second imprinting element for imprinting nanopores. The method is a double-sided imprinting method, which includes simultaneously imprinting from two opposite surfaces of the film body with the first imprinting unit and the second imprinting element to imprint on one side of the film body to form nanopores and on the other side to form micropores; and/or
wherein the imprinting apparatus comprises a first imprinting unit, a second imprinting unit and a third imprinting unit, the first imprinting unit having a first imprinting element, the second imprinting unit having a second imprinting element, and the third imprinting unit having a smooth surface without an imprinting element. The method is a double-sided imprinting method, which includes firstly using the first imprinting unit and the third imprinting unit to imprint micropores on one side of the film body, the micropores do not penetrate the film body and leave a diaphragm, and then imprinting nanopores using the first imprinting unit and the second imprinting unit on the diaphragm on the other side of the film body, in particular
wherein one of the first imprinting unit and the second imprinting unit may be softer than the other; and/or
wherein the first imprinting unit and the second imprinting unit may both be made of a hard material or may both be made of a soft material; or one of the first imprinting unit and the second imprinting unit may be made of hard a material while the other of a soft material; and/or
wherein the nanoporous thin film may include multiple layers of film bodies imprinted with the nanopores and the micropores, wherein the adjacent film bodies can be arranged in a manner of nanopore facing to nanopore, or nanopore facing to micropore, or micropore facing to micropore.

6. The method according to claim 1, wherein the method further comprises a pore treatment process step, and the pore treatment process is used to make the imprinted nanopores penetrate the entire film body.

7. The method according to claim 6, wherein the pore treatment process comprises a cooling/heating treatment step, which is carried out by performing a rapid cooling process on the film body coming out of the curing process, and the diaphragm portion of the film body that is not penetrated by the nanopores shrinks and ruptures rapidly with the aid of a rapid temperature change, so that the nanopores penetrate the entire film body, in particular
wherein the cooling temperature in the cooling/heating treatment step is set between -100 degrees Celsius and 30 degrees Celsius; and/or
wherein the cooling/heating treatment step alternately heats and cools the film body imprinted with nanopores from the curing process, by means of rapid temperature changes, the part of the film body that is not penetrated by the nanopores is alternately expanded and contracted by thermal expansion and contraction, so that the nanopores penetrate the membrane body, in particular
wherein the heating temperature in the cooling/heating treatment step is set between 100 degrees Celsius and 400 degrees Celsius, and the cooling temperature is set between -100 degrees Celsius and 30 degrees Celsius.

8. The method according to claim 7, wherein the cooling/heating treatment process is performed by spraying low-temperature gas on the surface of the film body, or by spraying low-temperature liquid nitrogen on the surface of the film body.

9. The method according to one of claims 6 to 8, wherein a diaphragm of the film body which is not penetrated by nanopores can be partially ruptured and penetrated by rapidly heating the surface of the film body by applying light irradiation to the surface of the film body; and/or
wherein the pore treatment process includes a plasma etching process, and the plasma etching process is used to reduce the thickness of the film body so that the part of the diaphragm that cannot be penetrated in the nanopore is thinned to penetrate, in particular
wherein the plasma etching process comprises outputting RF generated by an RF power source in a vacuum reaction chamber to a coupling coil, mixing the etching gas in a proportion and causing it to be discharged by a coupled glow to produce a high density plasma, causing the plasma to bombard a thin film surface by the RF action of the lower electrode to interrupt the chemical bond of the thin film surface and generating volatile substances with the etching gas, causing the volatile substances to be removed from the film in the form of a gas and extracted from the pump line, thereby causing the portion of the film body not penetrated by the nanopores to be etched and thinned to the point of penetration, wherein the film body is brought into the vacuum environment required for the etching process by differential pumping technology, in particular
wherein the film body is etched from the side imprinted with nanopores, or the film body is etched from the side without nanopores, or simultaneously etch from the film body on both sides of the film body.

10. The method according to one of claims 6 to 9, wherein the pore treatment process includes a double-sided differential pressure process, and the double-sided differential pressure process is performed by injecting high-pressure gas from one side of the film body and is used to break with the help of the pressure difference between the upper and lower surfaces the part of the film body that is not penetrated by the nanopores, so that the nanopores penetrate the film body, in particular
wherein the high-pressure gas is a pulsed high-pressure gas; and/or
wherein a high-pressure spray head is used to spray high-pressure gas from one side of the film body, and two or more support rollers on the other side of the film body are employed to support the film body; and/or
wherein the air pressure on the sides of the film body is measured using a pressure sensor to ensure that the pressure difference between the sides of the film body is within a desired range.

11. The method according to one of claims 6 to 10, wherein the pore treatment process comprises a surface evaporation or vapor deposition step, and the surface evaporation or vapor deposition step is used to correct and adjust the diameter of the nanopores, in order to make the pore size of the nanopores smaller; and/or
wherein the pore treatment process includes a gas permeability detection step, and the gas permeability detection step is used to detect the permeability of the nanopores in the film body, in particular
wherein the gas permeability detection step comprises injecting high-pressure gas from one side of the film body to the surface of the film body, and detecting both sides of the film body by pressure sensors. The permeability is determined by comparing the pressure difference or the pressure ratio with the one of a standard membrane sample with known permeability; and/or
wherein the gas permeability detection step comprises spraying high-pressure gas from one side of the film body to the surface of the film body, measuring the bending displacement of the film body, and the bending displacement is compared with the one of a standard membrane sample with known permeability to determine the permeability.

12. The method according to any one of the preceding claims, wherein the method further comprises a surface coating process step, in which a metal layer is sprayed on the surface of the film body; and/or
wherein the coating or particles are sprayed on the surface of the film body so that the film body has a sterilization and disinfection effect, in particular
wherein the particles are silver particles; and/or
wherein in the surface coating step, a metal layer is sprayed on the surface of the film body to form the film body into a conductive film body; and/or wherein the method also comprises a pre-curing process step, which is used to at least partially cure the film body by transferring energy to the film body by means of an energy device prior to the nano imprinting process, in particular wherein the energy device comprises a resistance wire capable of generating heat, an infrared emitting cover that emits infrared lights, or an ultraviolet lamp capable of emitting ultraviolet lights; and/or
wherein the method further comprises a substrate film pasting step and/or a reeling step. The substrate film pasting step is used to apply a substrate film on the upper surface and/or under the film body. The substrate film with pores is pasted on the surface of the film body to enhance its mechanical properties. The reeling step is used to furl the finished film on a reel for storage or transportation, in particular
wherein the pasted substrate film of the film body is peeled away from the film body prior to the reeling step, and the film body and the substrate film are reeled up separately

13. A nanoporous thin film made by the method of any one of claims 1 to 12, wherein the film comprises a film body provided with a plurality of nanopores which are arranged in a predetermined array and penetrate the film body, wherein the plurality of nanopores have the same or substantially the same pore diameter, and wherein, the duty cycle of the nanopores on the unit area of the film is configured so that the film has a desired permeability, in particular
wherein the thin film is used to filter ultrafine particles, and the pore sizes of the nanopores are all configured to be smaller than the size of the particles to be filtered; and/or
wherein the nanopores are formed by imprinting or liquid casting; and/or
wherein the pore size of the nanopores is between 30 nm and 300 nm, in particular
wherein the nanopores of the film are in any one of the following shapes: circle, square, triangle, hexagon; and/or
wherein the nanopores are configured to have a duty cycle of up to 10% or more per unit area of the film; and/or
wherein the film body is an organic polymer film body; and/or
wherein the film body is transparent in the visible light but opaque in the ultraviolet light, so that the film body can absorb ultraviolet radiation.

14. The nanoporous thin film according to claim 13, wherein the film body is any one of the following film bodies: polyimide film body, polyethylene terephthalate film body, polydimethylsiloxane film body, graphene film body; and/or
wherein the film body is a flexible solid or liquid prior to the formation of the film; and/or
wherein the thickness of the film body is more than 0.2 nm and less than 100 microns; and/or
wherein the film further comprises a substrate film, and the film body is attached to the substrate film, in particular
wherein the substrate film is provided with a plurality of nanopores or micro-pores that are larger than the nanopores of the film body, or pores with larger diameter arranged in a predetermined array through the substrate film, the nanopores of the film body being at least partially connected to the nanopores or micropores, or pores with larger diameter of the substrate film; and/or
wherein the film body of the film is provided with pores in a double-layer array, wherein, the plurality of nanopores are arranged on the first surface of the film body in a first array and penetrate the first thickness of the film body, and the plurality of micropores or pores with a larger particle diameter are arranged on a second surface of the film body opposite the first surface in a second array and through the second thickness of the film body, wherein at least the second thickness is less than the total thickness of the film body, and wherein the nanopores are at least partially connected to the micropores or pores with larger particle diameters; and/or
wherein the film comprises multiple layers of alternately arranged film bodies and substrate films, wherein, each film body is provided with a plurality of nanopores arranged in a first array and penetrating the film body, and the pore diameters of the nanopores are all configured to be smaller than the particle size of the ultrafine particles to be filtered, wherein, each substrate film is provided with a plurality of micropores or pores with a larger particle diameter that are arranged in a second array and penetrate the substrate film, and wherein, the nanopores are at least partially connected to the micropores or pores with a larger particle diameter; and/or
wherein the film body is sprayed with an insulating layer to be configured as an insulating film body; and/or
wherein the film body is sprayed with a conductive layer to be configured as a conductive film body; and/or
wherein the surface of the film body is sprayed with a germicidal coating or particles, so that the film has a sterilization and disinfection effect, in particular
wherein the particles are silver particles; and/or
wherein the surface of the thin film is sprayed with a hardness-enhancing layer; and/or
wherein the film is a transparent or translucent film.

15. The application of the nanoporous thin film according to any one of claims 13 to 14 in protective equipment, the protective equipment being a mask, hood, protective clothing, or gloves; and/or
in air filtration equipment for buildings or vehicles, water or oil purification equipment, hemodialysis equipment, lithium batteries, or reverse osmosis membranes for seawater desalination.
